# DEMANDE DE BREVET EUROPEEN

(11) **EP 2 826 712 A1**
(43) Date de publication de la demande: **21.01.2015**
(21) Numéro de dépôt: 14177473.7
(22) Date de dépôt: 17.07.2014
(51) Int. Cl.: B64D 11/06, B64D 25/10, B60N 2/015

(54) **Ensemble siège-plancher ensemble siege-plancher a encastrement de la poutre d'un siege monopoutre dans le plancher**

(30) Priorité: 17.07.2013 FR 1357008
(71) Demandeur: EADS Sogerma, 17303 Rochefort Cedex (FR)
(72) Inventeur: Bacquey, Lionel, 33700 MERIGNAC (FR); Normandin, Julien, 17320 MARENNES (FR); BARRE, Rémy, 17620 ECHILLAIS (FR)
(74) Mandataire: Maupilier, Didier

(57) **Abrégé**

Un ensemble siège-plancher (100) pour véhicule comporte un élément de plancher (140), au moins un siège monopoutre (120) fixé à l'élément de plancher par une poutre (122), sur laquelle sont fixés une assise et un dossier du siège.

L'élément de plancher (140) comporte une structure de panneau raidi (141) dont une face forme une semelle supérieure (143) d'au moins une traverse plancher (142a, 142b) et comporte un caisson d'encastrement (160) ouvert sur la semelle supérieure (143) et fixé à la semelle supérieure et ou à l'au moins une traverse plancher, et l'au moins un siège monopoutre (120) est fixée la poutre (122).

Un fuselage d'aéronef comportant un plancher avec de tels ensembles siège-plancher se trouve renforcé par la structure des éléments de plancher.

## Description

La présente invention appartient au domaine des sièges pour moyens de transport, par exemple pour aéronefs.

Plus particulièrement l'invention concerne un siège à structure monopoutre pourvu d'une interface de fixation avec une structure de véhicule telle qu'un plancher de véhicule.

L'invention s'adresse également à un plancher de véhicule intégrant une telle interface de fixation et un ensemble siège-plancher incorporant une telle interface de fixation.

Dans le domaine des véhicules de transport, il est connu de fixer des sièges destinés aux passagers ou à des membres d'équipage à la structure du véhicule.

De manière connue les sièges sont souvent fixées au plancher du véhicule soit à des emplacements prédéterminés fixes, soit sur des rails solidaires du plancher qui permettent de placer chaque siège à différents emplacements sans remettre en cause la structure du plancher et les points de fixation.

Cette dernière solution est largement utilisée dans le cas des aéronefs pour lesquels elle permet de mettre en place des aménagements très différents suivant le type de confort souhaité pour l'exploitation de l'aéronef.

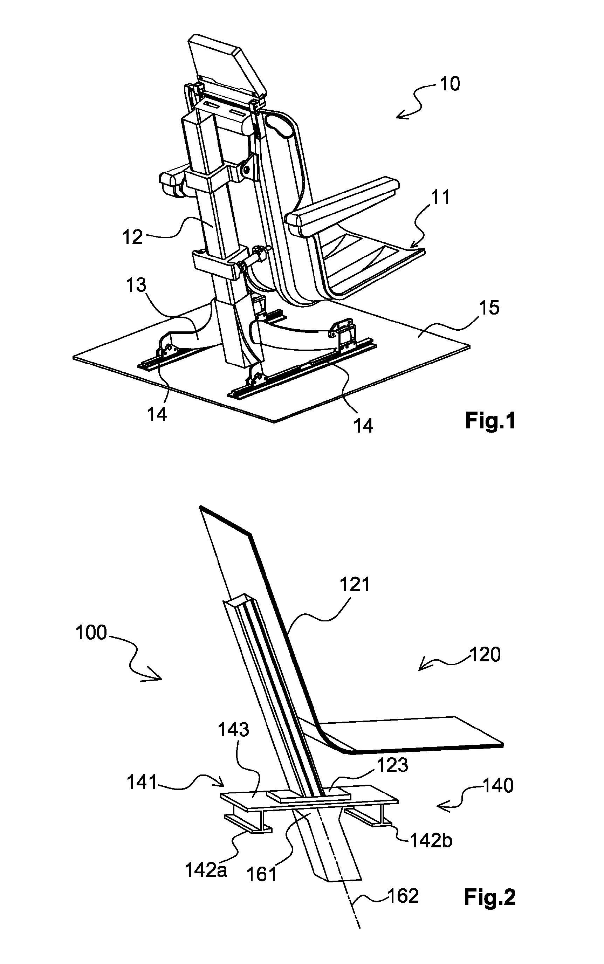

Cette dernière solution est également, comme illustré sur la figure 1, utilisable dans le cas d'un siège 10 à structure dite monopoutre dans lequel un ensemble 11 assise et dossier est solidaire d'une poutre 12 sensiblement verticale, plus ou moins inclinée, en général vers l'arrière du siège, par rapport à la verticale.

La poutre 12 est alors solidaire d'une structure support 13 comportant des points de fixations répartis pour être fixés sur les rails 14 du plancher15.

Dans ces solutions, il est nécessaire de disposer de jeux mécaniques nécessaires pour absorber les défauts de positionnement des points de fixation, en raison des tolérances de fabrication ou en raison de déformations dans les structures, que ces points de fixation soient directement sur la structure ou sur des rails. Ces jeux nécessaires conduisent alors à des sensations d'instabilités pour les occupants des sièges et à des bruits lorsque le siège est dans un environnement vibratoire comme souvent dans les véhicules.

En outre il est généralement demandé au siège de disposer de réglages de confort qui, lorsque le siège est fixé au plancher, permettent des déplacements de l'assise et du dossier, le plus souvent longitudinalement, verticalement et en inclinaison. Ces réglages lorsqu'il sont souhaités sur le siège impliquent des mécanismes supplémentaires indépendants des moyens de fixation au plancher et qui, outre leurs complexités et leurs coûts, augmente la masse du siège, notamment dans des parties supérieures du siège avec pour conséquences des renforcements de structure pour satisfaire aux exigences de tenue aux cas de crash, ce qui s'avère pénalisant en particulier dans les applications aéronautiques. Les jeux nécessaires pour fixer le siège sont également une source de défaut de fonctionnement dans les parties coulissantes des sièges.

La présente invention propose un agencement dans lequel le siège est fixé à la structure d'un véhicule par un caisson d'encastrement, lequel caisson d'encastrement peut être associé à un élément de plancher.

Un ensemble suivant l'invention comporte un siège monopoutre et des moyens de fixation de la poutre du siège à une structure d'un véhicule sur laquelle sont fixés l'assise et le dossier du siège. L'assise et le dossier peuvent constituer un baquet rigide ou être articulés entre eux.

Les moyens de fixation comportent un caisson d'encastrement ouvert sur une face supérieure du caisson d'encastrement et le siège est fixé par la poutre qui pénètre dans le caisson d'encastrement par sa face supérieure et de sorte qu'une partie substantielle des efforts générés en utilisation par le siège monopoutre est transmise au caisson d'encastrement.

Il est ainsi obtenu un moyen à la fois simple à mettre en oeuvre et performant pour fixer d'un siège à une structure du véhicule, le siège étant montable et démontable par encastrement de la poutre unique du siège dans le caisson d'encastrement fixé à la structure du véhicule, structure qui peut être une structure de plancher ou une autre structure adaptée pour reprendre les efforts générés par le siège. La mise en oeuvre d'une fixation du siège concentrée évite les jeux nécessaires au montage dans les solutions connues et les problèmes trouvant leur origine dans ces jeux.

Dans une forme préférée de réalisation, le siège monopoutre est fixé uniquement par la poutre pénétrant dans le caisson d'encastrement agencement duquel il résulte que tous les efforts générés sur le siège monopoutre sont transmis à la structure du véhicule en transitant par le caisson d'encastrement et que la structure du siège n'est pas affectée par les déformations de la structure du véhicule, en particulier en cas de crash, ce qui permet de préserver l'intégrité structurale du siège en présence de ces déformations.

Il est ainsi évité de mettre en oeuvre des cheminements d'efforts complexes et de multiplier les points de fixation ce qui pour conséquence de rendre le montage et le démontage du siège plus complexe et moins rapide.

Dans une forme de réalisation le caisson d'encastrement comporte des points de fixation, destinés à le fixer à le fixer directement ou indirectement à la structure du véhicule, qui sont agencés pour que le montage du caisson d'encastrement soit réversible suivant une orientation longitudinale, afin que le siège monopoutre dont la poutre est maintenue dans le caisson d'encastrement puisse être fixé dans le véhicule orienté l'avant dans une direction ou dans la direction opposée sans que ne soient remis en cause les moyens de fixation.

Il est ainsi possible avec des éléments standards de réaliser le montage d'un siège soit face vers l'avant du véhicule, soit face vers l'arrière du véhicule, que cette possibilité soit utilisée lors de l'installation d'une cabine ou lors d'un réaménagement de la cabine du véhicule lorsque les moyens de fixation du caisson d'encastrement à la structure du véhicule autorise son démontage.

Dans un mode de réalisation, le caisson d'encastrement comporte un dispositif d'immobilisation pour fixer la poutre dans au moins deux positions différentes.

Il est ainsi possible de réaliser un réglage de la position du siège sans qu'il ne soit nécessaire de modifier le caisson d'encastrement.

Dans un mode de réalisation, pour permettre un ajustement de la position longitudinale d'un siège, le caisson d'encastrement est allongé dans le sens longitudinal et le dispositif d'immobilisation est agencé pour pouvoir fixer la poutre dans le caisson d'encastrement dans au moins deux positions différentes suivant la direction longitudinale.

Dans un mode de réalisation, pour permettre un ajustement de la position latérale d'un siège, le caisson d'encastrement est allongé dans le sens transversal et le dispositif d'immobilisation est agencé pour pouvoir fixer la poutre dans le caisson d'encastrement dans au moins deux positions différentes suivant la direction transversale.

Dans un mode de réalisation, pour permettre un ajustement de l'inclinaison de la poutre par rapport à la verticale et donc de l'inclinaison générale du siège plus ou moins dans un sens longitudinal, le dispositif d'immobilisation du caisson d'encastrement est agencé de sorte que la poutre peut être fixée dans le caisson d'encastrement dans au moins deux positions angulaires différentes suivant une inclinaison dans un plan vertical longitudinal.

Dans un mode de réalisation, pour permettre un ajustement de la direction d'un siège, le dispositif d'immobilisation est agencé de sorte que la poutre peut être fixée dans ledit caisson d'encastrement avec un plan vertical de symétrie du siège dans au moins deux positions différentes en directions par rapport à la direction longitudinale.

Les différentes possibilités d'ajustement ci-dessus peuvent être combinées en fonction des besoins.

Dans un mode de réalisation, le caisson d'encastrement comporte un fourreau glissant et ou pivotant suivant le cas, et le fourreau comporte des moyens de verrouillage de sa position dans le caisson d'encastrement, la poutre étant dans ce cas de préférence maintenue de manière fixe dans le fourreau.

L'ensemble des fonctions de modification ou d'ajustement de la position du siège par rapport à l'élément de plancher étant alors reporté dans le caisson d'encastrement sans que la complexité du siège ne s'en trouve affectée.

Dans une forme de réalisation, la poutre ou le fourreau dans lequel est fixée la poutre sont immobilisés dans le caisson d'encastrement par des moyens de verrouillage lors de l'installation du siège.

Dans d'autres forme de réalisation, des commandes sont agencées accessibles à un utilisateur du siège pour déverrouiller et verrouiller le dispositif d'immobilisation ou pour actionner les moyens de verrouillage dans des positions différentes.

Il est ainsi obtenu un siège dont au moins certaines des positions sont réglables par l'occupant du siège.

Avantageusement, un espace entre la poutre et une ouverture supérieure du caisson d'encastrement est obturée par un ou des volets et ou par un soufflet de sorte à éviter la chute d'objets dans le caisson d'encastrement.

Dans une forme de réalisation, l'invention concerne un ensemble siège-plancher pour un véhicule qui comporte au moins un siège monopoutre et au moins un caisson d'encastrement correspondant aux configurations décrites précédemment pour cet ensemble, et qui comporte un élément de plancher, lequel élément de plancher comporte une structure de panneau raidi dont une face forme une semelle supérieure d'au moins une traverse plancher, le caisson d'encastrement étant ouvert sur la semelle supérieure et fixé à la semelle supérieure et ou à l'au moins une traverse plancher.

Il est ainsi obtenu un ensemble intégrant une structure de plancher préalablement équipée et optimisée pour reprendre les fixation des sièges et qui est prête à être fixée à la structure du véhicule à laquelle elle participe.

Dans une forme de réalisation, la liaison structurale entre le caisson d'encastrement et la semelle supérieure et ou la ou les traverses plancher est renforcée par des goussets et ou par des bielles structurales.

L'invention concerne également un véhicule comportant un ensemble siège-plancher conforme à l'invention et en particulier un aéronef dans lequel la structure de l'élément de plancher est prise en considération dans le dimensionnement structural de la structure du fuselage de l'aéronef.

La description d'un mode de réalisation non limitatif de l'invention est faite en référence aux figures qui représentent de manière schématique :
- Figure 1 :: un exemple de l'art antérieur d'un siège fixé à des rails de plancher, appliqué à un siège monopoutre ;
- Figure 2 :: un premier mode de réalisation suivant l'invention dans lequel la poutre du siège est fixée dans le caisson d'encastrement lui-même fixé à une structure de plancher pour constituer un ensemble siège-plancher dans lequel la poutre ne prend qu'une seule position dans le caisson d'encastrement ;
- figure 3 :: un deuxième mode de réalisation d'un ensemble siège-plancher suivant l'invention dans lequel la poutre peut prendre plusieurs positions longitudinales dans le caisson d'encastrement suivant un sens longitudinal ;
- figure 4 :: un troisième mode de réalisation d'un ensemble siège-plancher suivant l'invention dans lequel la poutre peut prendre plusieurs positions latérales dans le caisson d'encastrement suivant un sens transversal ;
- figure 5 :: un quatrième mode de réalisation d'un ensemble siège-plancher suivant l'invention dans lequel la poutre peut prendre plusieurs positions en inclinaison par rapport à la verticale dans le caisson d'encastrement suivant un sens longitudinal ;
- figure 6 :: un cinquième mode de réalisation d'un ensemble siège-plancher suivant l'invention dans lequel la poutre peut prendre plusieurs positions en direction dans un plan horizontal dans le caisson d'encastrement.

Sur les différentes figures représentant des modes différents de réalisation de l'invention des éléments équivalents bien que de structures différentes portent le même repère.

La figure 2 illustre de manière schématique un premier mode de réalisation de l'invention appliqué au cas d'un ensemble siège-plancher 100 d'un véhicule suivant l'invention.

Bien que la description soit détaillée avec un mode de réalisation incorporant un élément de structure correspondant à un élément de plancher auquel est fixé un caisson d'encastrement, il doit être compris que le caisson d'encastrement peut être fixé plus ou moins directement à d'autres éléments de structure du véhicule qui ne sont pas nécessairement assimilable à un plancher.

L'ensemble siège-plancher 100 comporte un siège monopoutre 120 et un élément de plancher 140 d'un plancher d'une cabine, non représentée.

Le siège monopoutre 120 est ici représenté de manière simplifiée par un baquet de siège 121, lequel baquet de siège est solidaire d'une poutre 122 sensiblement verticale, en pratique inclinée vers l'arrière du siège.

La structure du baquet de siège 121, de la poutre 122 et des éléments, non représentés, par lesquels ledit baquet de siège est solidaire de ladite poutre de manière fixe ou réglable ne sont pas décrit ici, des exemples étant connu de l'art antérieur.

L'élément de plancher 140 dont une partie seulement est illustrée dans la zone de fixation du siège comporte une première structure présentant la forme d'un panneau raidi 141.

Bien que l'illustration de ce premier mode de réalisation, ainsi que les illustrations des modes décrits ultérieurement, ne représente un seul siège, un élément de plancher peut comporter, et comporte a priori, plusieurs sièges, l'élément de plancher ayant vocation à correspondre à une largeur d'un plancher de cabine dans laquelle les sièges sont généralement agencés par rangs.

Le panneau raidi 141 comporte lui-même au moins une traverse plancher 142a, 142b à grande inertie, une traverse à section en I dans l'exemple illustré, dont une semelle supérieure 143 s'étend dans un plan horizontal, considéré ici comme un plan de référence du plancher.

De préférence, la semelle supérieure 143 s'étend entre au moins deux traverses plancher 142a, 142b pour lesquelles traverses plancher elle forme une semelle supérieure 143 commune au dites aux moins deux traverses plancher.

Il doit être considéré ici que la réalisation de la structure du panneau raidi 141 peut mettre en oeuvre toute technique connue pour un tel exemple de structure, en particulier par l'assemblage de pièces élémentaires ou complexes, métalliques ou en matériaux composites non métalliques, ou par la réalisation de structures intégrales, par exemple par usinage, formage ou moulage de matériaux métalliques ou de polymères renforcés de fibres.

Les traverses plancher peuvent également avoir d'autre formes avec des sections ouvertes, par exemple en forme de C ou de Z, ou des sections fermées formant des caissons.

L'élément de plancher 140 comporte également un caisson d'encastrement 160.

Le caisson d'encastrement 160 est un caisson structural dans le sens où la structure du caisson est réalisée pour transmettre les efforts du siège vers le plancher.

Le caisson d'encastrement 160 est fixé à la semelle supérieure 143 et, dans une forme préférée de réalisation telle qu'illustrée, se trouve principalement sous ladite semelle supérieure, c'est-à-dire sous le plancher, du même côté que les traverses plancher 142a, 142b.

Le caisson d'encastrement 160 peut également être fixé à une ou plusieurs traverses plancher, voire d'autres éléments de structure du véhicule.

Le caisson d'encastrement 160 est ouvert au moins sur une face supérieure de sorte que l'intérieur dudit caisson est accessible depuis le dessus du plancher.

En outre une section du caisson d'encastrement 160 suivant un plan parallèle au plancher est suffisante pour permettre d'y placer une base 123 de la poutre 122 qui pénètre dans ledit caisson d'encastrement par la face supérieure.

Le siège monopoutre 120 est relié à la structure du véhicule, directement ou par un élément de plancher, par le caisson d'encastrement 160 qui immobilise la poutre 122 et transmet une partie substantielle des efforts générés au niveau du siège.

Dans une forme de réalisation, le siège monopoutre 120 n'est relié à la structure du véhicule, directement ou par un élément de plancher, que par le caisson d'encastrement 160 qui immobilise la poutre 122 et reprend l'ensemble des efforts générés au niveau du siège.

L'homme du métier comprend ici que l'encastrement est déterminé sur le plan de la résistance structurale par les différents cas de chargement du siège et doit être calculé en particulier pour le siège comportant un passager et soumis à des accélérations normales ou exceptionnelles en utilisation.

Dans une forme de réalisation telle qu'illustrée sur la figure 2, le caisson d'encastrement 160 est renforcé par un ou des goussets 161 dans un sens longitudinal au niveau de la semelle supérieure 143 pour assurer une transmission saine des efforts. Un résultat équivalent peut également être obtenu à l'aide de bielles structurales de transmission d'efforts rapportées, cas non illustré.

Comme il est également visible sur la figure 2, un axe principal 162 du caisson structural 160 est orienté avec une inclinaison voulue pour la poutre du siège de sorte que l'inclinaison de la poutre est obtenu avec une poutre rectiligne plus simple et plus légère qu'une poutre qui dans un autre mode de réalisation, non illustré, peut être coudée.

Des moyens de fixation, non représentés, assurent la fixation de la poutre 122 dans le caisson d'encastrement 160 de sorte que ladite poutre est immobilisée et ne puisse pas se séparer du plancher lorsque l'ensemble siège-plancher est soumis à des accélérations en fonctionnement.

Dans le cas du mode de réalisation considéré de tels moyens de fixations peuvent par exemple consister en des boulons ou en des axes à démontage rapide ou en des dispositifs à verrouillage.

Des moyens de raccordement électrique, de raccordement pneumatique et ou de raccordement hydraulique, non représentés, sont le cas échéant agencés dans le caisson d'encastrement, ou sur une face extérieure dudit caisson d'encastrement, pour raccorder des prises de servitudes du siège, par exemple des prises électriques, des connecteurs pneumatiques ou des connecteurs hydrauliques si le sièges est pourvu de dispositifs utilisant une ou plusieurs de ces énergies.

Dans un mode de réalisation, le caisson d'encastrement 160 est fixé de sorte que son montage et son démontage de l'élément de plancher 140 soient simples à réaliser par un opérateur de maintenance. Ainsi, lorsqu'un agencement de cabine ne prévoit pas de siège à l'emplacement déterminé par un caisson d'encastrement ledit caisson peut être démonté pour éviter une masse inutile à transporter, le vide laissé dans le plancher à l'emplacement du caisson d'encastrement démonté étant alors avantageusement obturé par une simple plaque de fermeture de dimensions adaptées.

Le cas échéant s'il n'est pas souhaité démonter le caisson d'encastrement 160 lorsqu'il ne maintient pas un siège, une plaque de fermeture est simplement fixée sur ledit caisson pour obturer l'ouverture supérieure dudit caisson d'encastrement laissé en absence de poutre placée dans ledit caisson d'encastrement.

Il doit être noté que le caisson d'encastrement 160 ne comporte pas nécessairement de fond à sa partie inférieure, la poutre pouvant alors dépasser sous le caisson. Cependant un fond structural permet de renforcer la rigidité du caisson d'encastrement si besoin et un fond structural ou non structural permet de contenir des objets qui chuteraient dans le caisson et qui sinon pourraient se loger dans des endroits difficiles d'accès pour les en extraire. Avantageusement, un ou des orifices de drainage sont agencés dans un fond du caisson d'encastrement en un point bas pour y éviter une accumulation de liquide répandu accidentellement ou d'eau de condensation.

On comprend de la description du premier mode de réalisation de l'invention qui vient d'être faite que le montage et le démontage d'un siège 120 devient particulièrement simple pour un opérateur par un encastrement de la base 123 de la poutre dans le caisson d'encastrement fixé à l'élément de plancher 140 d'une cabine.

Un tel encastrement évite la mise en oeuvre de rails de plancher et évite que la base du siège ne soit élargie par une structure d'accrochage aux rails du plancher, comme dans l'exemple illustré sur la figure 1, tout en assurant la reprise des efforts d'encastrements nécessaires au maintien du siège dans tous les cas de chargement.

Il en résulte que l'emprise d'un siège au niveau du plancher se trouve particulièrement réduite, sensiblement la section de la poutre, et que le dégagement obtenu peut être mis à profit pour donner à un passager qui serait situé derrière le siège considéré la possibilité de placer ses pieds de chaque côté de la poutre sans aucune gêne.

Il résulte également de l'absence de structures entre l'assise du siège et le caisson d'encastrement une possibilité de course verticale de l'assise augmentée par rapport aux solutions conventionnelles qui permet de diminuer les efforts verticaux subits par un occupant du siège en cas de crash avec des accélérations verticales élevées.

En outre, dans le mode de réalisation décrit et contrairement aux solutions connues, l'élément de plancher est intégré à la structure du plancher calculée pour le passages d'efforts et avantageusement est intégrée à la structure du véhicule, par exemple un avion ou un hélicoptère, pour optimiser le passage des efforts dans les différentes parties de la structure dudit véhicule.

Par exemple le panneau raidi 141 qui est dimensionné sur le plan structural par les efforts à reprendre à l'encastrement 123 de la poutre, plus généralement de l'ensemble des sièges de l'élément de plancher, en particulier dans le cas des accélérations générées par un cas de crash d'un aéronef, est en mesure de transmettre des efforts généraux de la structure d'un fuselage et ainsi de réduire les contraintes, et donc la masse, dans d'autres parties du fuselage que le plancher.

Le premier mode de réalisation illustré sur la figure 2 qui vient d'être décrit, et dans lequel la poutre n'est fixée à la structure du véhicule, élément de plancher ou autre, par l'intermédiaire du caisson d'encastrement que dans une seule position, est susceptible de variantes et de perfectionnement qui apportent des avantages supplémentaires.

Si dans le premier mode de réalisation décrit, la position du siège est fixe, des modifications de position ou d'inclinaison de la poutre sont cependant possibles au moyen d'un autre modèle de caisson d'encastrement ou, pour agir sur la position du siège, en fixant le caisson d'encastrement en un autre emplacement de la structure si cette possibilité a été prévue.

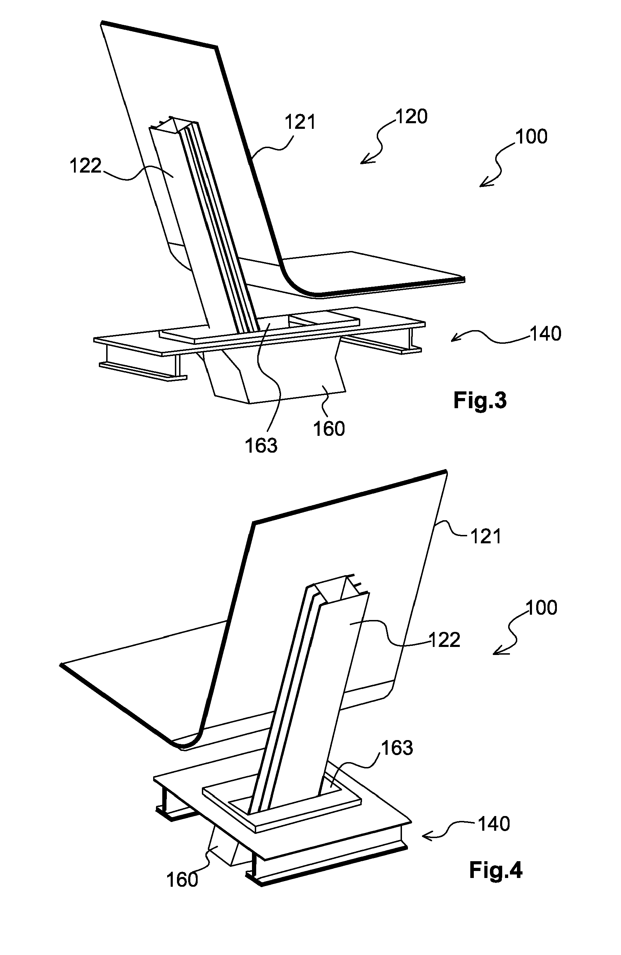

La figure 3 présente un deuxième mode de réalisation de l'ensemble siège-plancher 100 dans lequel le caisson d'encastrement 160 est allongé suivant la direction longitudinale du siège et comporte une section d'ouverture supérieure 163 également allongée suivant une même proportion dans la direction longitudinale.

Dans ce mode de réalisation la poutre 122 peut être fixée dans le caisson d'encastrement 160 à différentes positions longitudinales.

Dans ce cas, le siège 120 peut être fixé en différentes positions plus ou moins avancées lors de son installation ce qui permet de réaliser des agencements de cabine différents ou de prendre en compte des contraintes particulières de l'aménagement.

La figure 4 présente un troisième mode de réalisation de l'ensemble siège-plancher 100 dans lequel le caisson d'encastrement 160 est allongé suivant une direction transversale du siège et comporte une section d'ouverture supérieure 163 allongée suivant une même proportion dans la direction transversale.

Dans ce mode de réalisation la poutre 122 peut être fixée dans le caisson d'encastrement 160 à différentes positions transversales.

Dans ce cas, le siège 120 peut être fixé en différentes positions plus ou moins décalées latéralement lors de son installation ce qui permet de réaliser des agencements de cabine différents ou de prendre en compte des contraintes particulières de l'aménagement tel que la proximité d'une paroi latérale.

Par un choix adapté de l'extension latérale du caisson d'encastrement, et par un positionnement adapté de différents caissons d'encastrement sur une structure, par exemple dans un plancher de cabine, il est possible de convertir une cabine entre différents standard de confort en changeant le nombre de sièges de front sur une largeur de cabine en modifiant un écartement entre des sièges voisins.

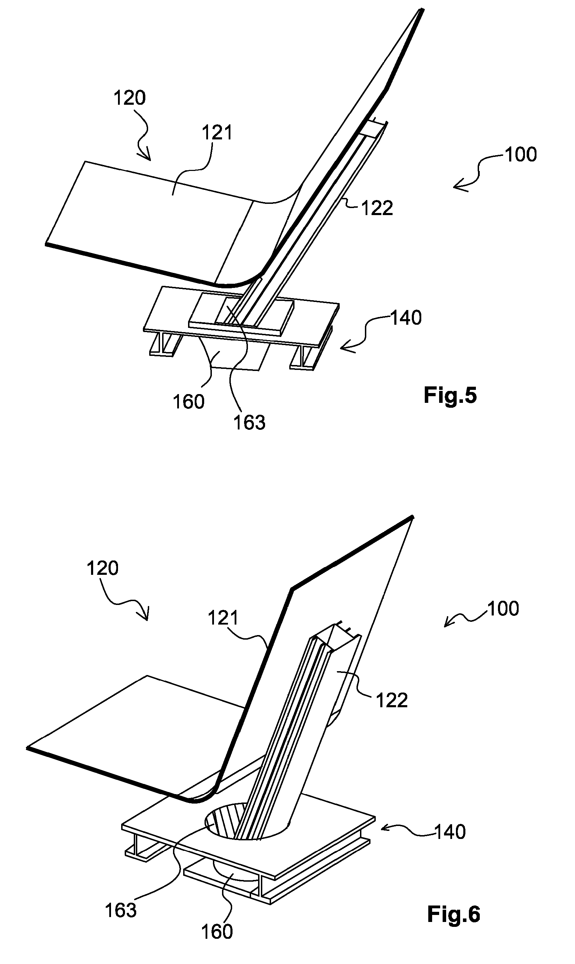

La figure 5 présente un quatrième mode de réalisation de l'ensemble siège-plancher dans lequel le caisson d'encastrement 160 comporte une section d'ouverture supérieure 163 suivant la direction longitudinale du siège à la section de la poutre 122.

Dans ce mode de réalisation le caisson d'encastrement 160 comporte des moyens d'ajustement de l'inclinaison de la poutre 122 qui peut alors être inclinée plus ou moins vers l'arrière ou vers l'avant dans un plan vertical.

L'inclinaison peut être simplement ajustable, c'est-à-dire que lorsque le siège est mis en place la poutre 122 est montée et fixée dans le caisson d'encastrement 160 avec une inclinaison déterminée par un installateur du siège.

L'inclinaison peut également être réglable par un utilisateur du siège. Dans ce cas, la poutre 122 est articulée dans le caisson d'encastrement 160 autour d'un axe de rotation transversal horizontal et des moyens de verrouillage commandés par l'utilisateur du siège assurent une immobilisation de ladite poutre en rotation autour dudit axe.

Dans l'exemple illustré, comme il ressort de la forme évasée vers le haut du caisson, l'axe de rotation est situé dans une partie inférieure du caisson d'encastrement 160 et l'ouverture supérieure 163 est allongée dans le sens longitudinal.

Dans une variante, non illustrée, l'axe de rotation est situé dans une partie supérieure du caisson d'encastrement de sorte que l'ouverture supérieure est limitée en allongement dans le sens longitudinal et le caisson est agrandi dans sa partie inférieure pour permettre les mouvements longitudinaux de l'extrémité inférieure de la poutre.

Dans les différents modes de réalisation qui viennent d'être décrit, il doit être remarqué qu'il est possible de fixer un siège 120 orienté face à l'avant du véhicule ou orienté dos à l'avant sans modification de l'ensemble siège-plancher 100 ou de la structure.

Pour réaliser une telle conversion, il suffit de monter le caisson d'encastrement 160 en position inversée, caisson d'encastrement pour lequel il aura été pris, lors de sa conception, la précaution de le définir pour que son montage soit réversible au niveau des fixations sur la semelle supérieure.

Il peut également être prévu que le caisson d'encastrement 160 soit capable, sans être retourné, de maintenir la poutre avec le siège orienté face à l'avant ou face à l'arrière du véhicule. Dans ce cas le caisson d'encastrement 160 est de profil sensiblement symétrique et comporte des moyens de fixation de la poutre 122 dans chacune des positions symétriques.

La figure 6 représente un cinquième mode de réalisation d'un ensemble siège-plancher 100 suivant l'invention.

Dans ce mode de réalisation, la position du siège face à l'avant du véhicule ou dos à l'avant du véhicule, voire orienté dans une direction quelconque par rapport à l'avant du véhicule, est obtenu par une rotation de la poutre 122 dans le caisson d'encastrement 160.

Dans l'exemple illustré sur la figure 6, la rotation réalisée autour d'un axe vertical de la poutre 122, ladite poutre présentant une inclinaison vers l'arrière du siège constante, conduit à un caisson d'encastrement 160 sensiblement axisymétrique en forme de tronc de cône.

Cette forme n'est cependant qu'un cas particulier. D'une part d'autre formes de caisson d'encastrement permettant de réaliser des rotations de la poutre, et d'autre part la symétrie axiale peut n'être que partielle en particulier si la rotation du siège n'est prévue que sur une partie d'un tour et ou si l'inclinaison vers l'arrière du siège de la poutre n'est pas constante en fonction de la position en rotation du siège.

Des moyens de verrouillage et de déverrouillage de la rotation autour de l'axe vertical de la poutre 122 dans le caisson d'encastrement 160, lorsqu'ils sont accessibles à l'utilisateur du siège permettent à celui-ci de modifier l'orientation de son siège.

Une telle possibilité permet de réaliser des modifications d'agencement relatif des sièges d'une cabine pendant l'utilisation en fonction des besoins des utilisateurs et des contraintes réglementaires tel que par exemple les phases de décollage et d'atterrissage d'un aéronef.

Dans chacun des modes de réalisation décrit dans lesquels la position ou l'inclinaison du siège 120 est modifiable par rapport à un système de référence du véhicule, la poutre 122 peut être fixée directement dans le caisson d'encastrement 160 ou bien être fixée dans un fourreau, non représenté, assurant une interface entre ladite poutre et ledit caisson d'encastrement et regroupant avantageusement tout ou partie des moyens mis en oeuvre pour les réglages de position ou d'inclinaison.

Il peut ainsi être réalisé un siège présentant une interface de fixation au niveau de la base 123 de la poutre 122 indépendante d'un type de caisson d'encastrement 160 qui peut pour un même siège correspondre à différent mode de réalisation tels que décrits.

Il doit être noté que les différents modes de réalisation sont décrit pour présenter chacun une capacité d'ajustement de position ou de réglage d'un siège mais que différents modes de réalisation peuvent être combinés pour augmenter les capacités d'ajustement ou de réglage d'un siège.

De manière générale, dans les modes de réalisation donnant la possibilité de fixer la poutre au caisson d'encastrement dans différentes positions, la conversion d'une position à une autre position possible peut être réalisée soit dans le cadre d'un changement de configuration réalisé par un opérateur de maintenance ou soit par un occupant du siège désirant en modifier une position de confort.

Dans ce dernier cas, des commandes sont mises à disposition de l'utilisateur du siège qui lui permettent de déverrouiller les mouvements, qui sont laissés modifiables par l'occupant du siège, dans le sens d'une modification souhaitée et de verrouiller à nouveau le siège lorsque la position souhaitée est atteinte.

Autant que nécessaire, des plaques de fermeture, non représentée, obturent de préférence la partie de l'ouverture supérieure 163 sur les côtés de la poutre 122.

Ces plaques de fermetures prennent si besoin la forme de volets coulissants ou d'autres moyens, par exemple un soufflet, et assurent l'obturation constante de l'ouverture supérieure 163 du caisson pour éviter que des objets tombent dans le caisson.

L'invention permet donc de réaliser des sièges de conception particulièrement simple ou pour le moins de sièges dont la plupart des éléments de l'assise et du dossier sont indépendants de la manière dont le siège est fixé à la structure ou au plancher sans exigences de jeux de montage, ou pour le moins avec des jeux réduits par rapport aux solutions conventionnelles, et sans pour autant perdre des possibilités d'ajustement et de réglage des positions du siège.

L'invention permet également d'intégrer la conception du siège et du plancher et de bénéficier ainsi dans la structure du plancher et du véhicule de renforts nécessaires au siège.

Ainsi le fuselage d'un aéronef, tel qu'un avion ou un hélicoptère, comportant un tel ensemble siège-plancher se trouvent renforcés par les éléments de plancher sur lesquels sont fixés les sièges.

## Revendications

1. Ensemble comportant un siège monopoutre (120) et des moyens de fixation d'une poutre (122) dudit siège monopoutre à une structure d'un véhicule **caractérisé en ce que** les moyens de fixation comporte un caisson d'encastrement (160) ouvert sur une face supérieure dudit caisson d'encastrement, par lequel caisson d'encastrement le siège monopoutre (120) est fixé par la poutre (122) pénétrant dans ledit caisson d'encastrement par la face supérieure de sorte qu'une partie substantielle des efforts générés en utilisation par ledit siège monopoutre est transmise au caisson d'encastrement (160).

2. Ensemble suivant la revendication 1 dans lequel le siège monopoutre (120) est fixé uniquement par la poutre (122) pénétrant dans le caisson d'encastrement (160) de sorte que tous les efforts générés en utilisation par ledit siège monopoutre sont transmis audit caisson d'encastrement.

3. Ensemble suivant la revendication 1 ou la revendication 2 dans lequel le caisson d'encastrement (160) comporte des points de fixation à une structure agencés de sorte que ledit caisson d'encastrement est démontable et réversible suivant une orientation longitudinale.

4. Ensemble suivant l'une des revendications précédentes dans lequel le caisson d'encastrement (160) comporte un dispositif d'immobilisation pour fixer la poutre (122) dans au moins deux positions différentes.

5. Ensemble suivant la revendication 4 dans lequel le caisson d'encastrement (160) est allongé dans le sens longitudinal et le dispositif d'immobilisation est agencé pour pouvoir fixer la poutre (122) dans ledit caisson d'encastrement dans au moins deux positions différentes suivant la direction longitudinale.

6. Ensemble suivant la revendication 4 ou la revendication 5 dans lequel le caisson d'encastrement (160) est allongé dans un sens transversal et le dispositif d'immobilisation est agencé pour pouvoir fixer la poutre (122) dans ledit caisson d'encastrement dans au moins deux positions différentes suivant la direction transversale.

7. Ensemble suivant l'une des revendications 4 à 6 dans lequel le dispositif d'immobilisation est agencé de sorte que la poutre (122) peut être fixée dans le caisson d'encastrement (160) dans au moins deux positions angulaires différentes suivant une inclinaison dans un plan vertical longitudinal.

8. Ensemble suivant l'une des revendications 4 à 7 dans lequel le dispositif d'immobilisation est agencé de sorte que la poutre (122) peut être fixée dans le caisson d'encastrement (160) avec un plan vertical de symétrie du siège (120) dans au moins deux position différentes en directions par rapport à la direction longitudinale.

9. Ensemble suivant l'une des revendications 4 à 8 dans lequel le caisson d'encastrement (160) comporte un fourreau glissant et ou pivotant suivant le cas, et comporte des moyens de verrouillage immobilisant la position dudit fourreau dans ledit caisson d'encastrement, la poutre (122) étant maintenue de manière fixe dans ledit fourreau.

10. Ensemble suivant l'une des revendications 4 à 9 dans lequel des commandes sont agencées accessibles à un utilisateur du siège pour déverrouiller et verrouiller le dispositif d'immobilisation et ou pour actionner les moyens de verrouillage de sorte à immobiliser la poutre (122) dans des positions différentes.

11. Ensemble suivant l'une des revendications précédentes dans lequel un espace entre la poutre (122) et une ouverture supérieure du caisson d'encastrement (160) est obturée par un ou des volets et ou par un soufflet.

12. Ensemble siège-plancher (100) pour véhicule comportant un élément de plancher (140), incorporant au moins un ensemble conforme à l'une des revendications précédentes et **caractérisé en outre en ce que** l'élément de plancher (140) comporte une structure de panneau raidi (141) dont une face forme une semelle supérieure (143) d'au moins une traverse plancher (142a, 142b) et **en ce que** le caisson d'encastrement (160) est ouvert sur la semelle supérieure (143) et fixé à ladite semelle supérieure et ou à la dite au moins une traverse plancher.

13. Ensemble siège-plancher suivant la revendication 12 dans lequel une liaison structurale entre le caisson d'encastrement (160) et la semelle supérieure (143) et ou l'au moins une traverse plancher (142a, 142b) est renforcée par des goussets 161 et ou par des bielles structurales.

14. Fuselage d'aéronef comportant un plancher incorporant un ou plusieurs ensembles siège-plancher conformes à l'une des revendications 12 ou 13.
